# EUROPEAN PATENT APPLICATION

(11) **EP 3 514 727 A2**
(43) Date of publication of application: **24.07.2019**
(21) Application number: 19152562.5
(22) Date of filing: 18.01.2019
(51) Int. Cl.: G06K 9/00

(54) **SENSOR AND ELECTRONIC APPARATUS FOR FINGERPRINT RECOGNITION**

(30) Priority: 19.01.2018 KR 20180007351
(71) Applicant: Samsung Electronics Co., Ltd., Gyeonggi-do 16677 (KR)
(72) Inventor: Kim, Jeonghoo, Suwon-si 16677 (KR); Kim, Suna, Suwon-si 16677 (KR); Prushinskiy, Valeriy, Suwon-si 16677 (KR); Hyun, Suk, Suwon-si 16677 (KR); Kim, Yongseok, Suwon-si 16677 (KR); Heo, Changryong, Suwon-si 16677 (KR)
(74) Representative: Nederlandsch Octrooibureau

(57) **Abstract**

A fingerprint sensor and an electronic device are provided. The fingerprint sensor includes a refractive member configured to refract light into a path toward at least one optical sensor, wherein the at least one optical sensor is configured to obtain the light, and a guide member disposed between the refractive member and the at least one optical sensor and configured to provide the path so that the refracted light is transmitted to the at least one optical sensor. The electronic device includes transparent cover; light source configured to output light toward transparent cover; refractive member configured to refract light into path toward at least one optical sensor; wherein at least one optical sensor is configured to obtain light; and guide member disposed between refractive member and at least one optical sensor and configured to provide path so that refracted light is transmitted to at least one optical sensor.

## Description

### Field of the Invention

The disclosure relates generally to a fingerprint recognition method and an electronic device therefor, and more particularly, to a fingerprint recognition method and an electronic device therefor having a fingerprint sensor that includes at least one refractive member configured to deflect reflected light from a cover toward an image sensor.

### Background to the Invention

Various services and additional functions provided through portable electronic devices such as smart phones are gradually expanding. In order to increase the effective value of such electronic devices and satisfy the needs of various users, communication service providers or electronic device manufacturers offer various functions and competitively develop electronic devices in order to differentiate the same from other companies.

As the performance of electronic devices becomes more sophisticated, various biometric technologies have been applied to portable electronic devices. One of the most widely used biometric technologies is fingerprint recognition technology. User authentication through fingerprint recognition is advantageous in that it provides excellent security while being a simple authentication method.

In an optical fingerprint sensor using a light source, especially when a user has dry/cold fingers, a quality deterioration phenomenon may occur in which it is difficult to distinguish a valley (or a concave portion) of a fingerprint from a ridge (or a convex portion) of the fingerprint because the cover and the fingerprint of a user are spaced apart from each other.

### Summary of the Invention

An aspect of the present disclosure is to provide a fingerprint sensor that includes at least one refractive member configured to deflect reflected light from the cover toward the image sensor, such that it is possible to clearly distinguish valleys from ridges in a fingerprint image detected by the image sensor even under conditions in which it is difficult to recognize a fingerprint image, such as dry conditions, by observing various surfaces of the fingerprint.

According to an embodiment of the disclosure, a fingerprint sensor is provided. The fingerprint sensor includes a refractive member configured to refract light into a path toward at least one optical sensor, wherein the at least one optical sensor configured to obtain the light; and a guide member disposed between the refractive member and the at least one optical sensor and configured to provide the path so that the refracted light is transmitted to the at least one optical sensor.

According to another embodiment of the disclosure, an electronic device is provided. The electronic device includes a transparent cover; a light source configured to output light toward the transparent cover; a refractive member configured to refract the light into a path toward at least one optical sensor, wherein the at least one optical sensor is configured to obtain the light; and a guide member disposed between the refractive member and the at least one optical sensor and configured to provide the path so that the refracted light is transmitted to the at least one optical sensor.

### Brief Description of the Drawings

The above and other aspects, features, and advantages of the present disclosure will be more apparent from the following detailed description taken in conjunction with the accompanying drawings, in which:
FIG. 1 is a block diagram of an electronic device in a network environment according to an embodiment;
FIG. 2 is a block diagram of a display device according to an embodiment;
FIG. 3A is a perspective view of an electronic device according to an embodiment;
FIG. 3B is a perspective view of an electronic device;
FIG. 4 is an illustration of an electronic device according to an embodiment;
FIGS. 5A, 5B, 5C, and 5D are illustrations of a method of detecting a fingerprint image according to various embodiments;
FIGS. 6A, 6B, 6C, 6D, and 6E are illustrations of prisms according to various embodiments;
FIG. 7 is a flowchart of a fingerprint authentication method according to an embodiment;
FIG. 8 is a flowchart of a fingerprint-based operation method of an electronic device according to an embodiment;
FIG. 9 is an illustration of an electronic device according to an embodiment; and
FIGS. 10A and 10B are illustrations of an electronic device according to various embodiments.

### Description of Embodiments of the Invention

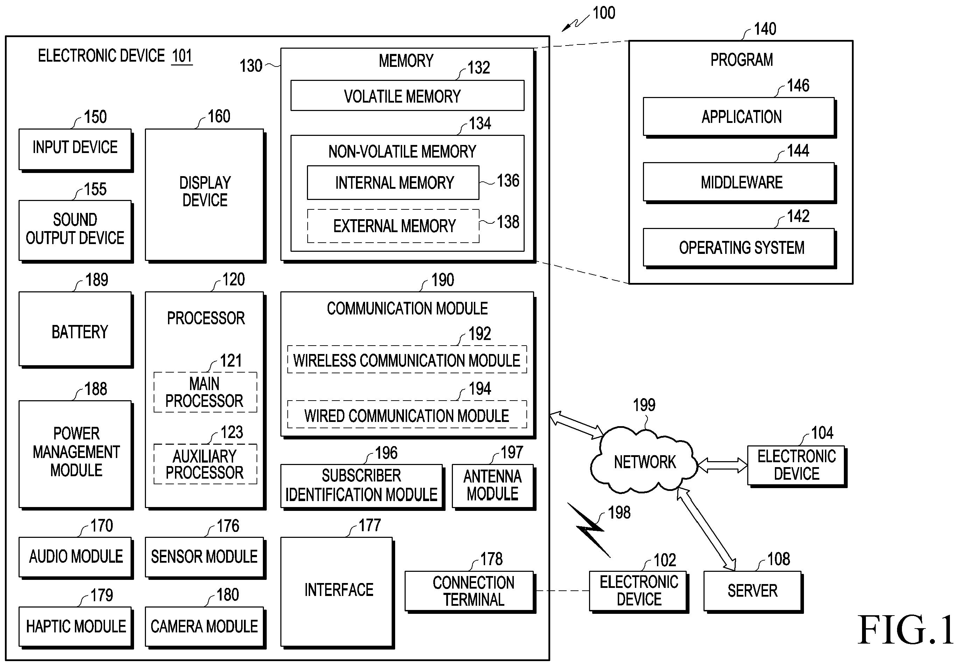

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, or a keyboard.

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector),

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include one or more antennas, and, therefrom, at least one antenna appropriate for a communication scheme used in the communication network, such as the first network 198 or the second network 199, may be selected, for example, by the communication module 190 (e.g., the wireless communication module 192). The signal or the power may then be transmitted or received between the communication module 190 and the external electronic device via the selected at least one antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

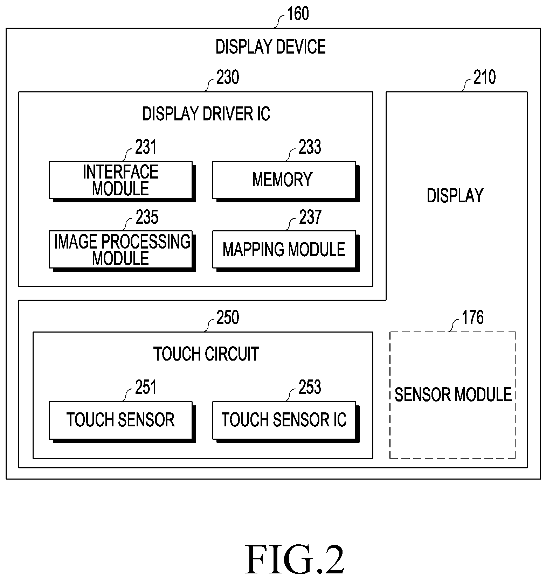

Fig. 2 is a block diagram illustrating the display device 160 according to various embodiments. Referring to Fig. 2, the display device 160 may include a display 210 and a display driver integrated circuit (DDI) 230 to control the display 210. The DDI 230 may include an interface module 231, memory 233 (e.g., buffer memory), an image processing module 235, or a mapping module 237. The DDI 230 may receive image information that contains image data or an image control signal corresponding to a command to control the image data from another component of the electronic device 101 via the interface module 231. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 230 may communicate, for example, with touch circuitry 150 or the sensor module 176 via the interface module 231. The DDI 230 may also store at least part of the received image information in the memory 233, for example, on a frame by frame basis. The image processing module 235 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 210. The mapping module 237 may generate a voltage value or a current value corresponding to the image data pre-processed or post-processed by the image processing module 235. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 210 may be driven, for example, based at least in part on the voltage value or the current value such that visual information (e.g., a text, an image, or an icon) corresponding to the image data may be displayed via the display 210.

According to an embodiment, the display device 160 may further include the touch circuitry 250. The touch circuitry 250 may include a touch sensor 251 and a touch sensor IC 253 to control the touch sensor 251. The touch sensor IC 253 may control the touch sensor 251 to sense a touch input or a hovering input with respect to a certain position on the display 210. To achieve this, for example, the touch sensor 251 may detect (e.g., measure) a change in a signal (e.g., a voltage, a quantity of light, a resistance, or a quantity of one or more electric charges) corresponding to the certain position on the display 210. The touch circuitry 250 may provide input information (e.g., a position, an area, a pressure, or a time) indicative of the touch input or the hovering input detected via the touch sensor 251 to the processor 120. According to an embodiment, at least part (e.g., the touch sensor IC 253) of the touch circuitry 250 may be formed as part of the display 210 or the DDI 230, or as part of another component (e.g., the auxiliary processor 123) disposed outside the display device 160.

According to an embodiment, the display device 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 210, the DDI 230, or the touch circuitry 150)) of the display device 160. For example, when the sensor module 176 embedded in the display device 160 includes a biometric sensor (e.g., a fingerprint sensor), the biometric sensor may obtain biometric information (e.g., a fingerprint image) corresponding to a touch input received via a portion of the display 210. As another example, when the sensor module 176 embedded in the display device 160 includes a pressure sensor, the pressure sensor may obtain pressure information corresponding to a touch input received via a partial or whole area of the display 210. According to an embodiment, the touch sensor 251 or the sensor module 176 may be disposed between pixels in a pixel layer of the display 210, or over or under the pixel layer.

The electronic device according to various embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101) . For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

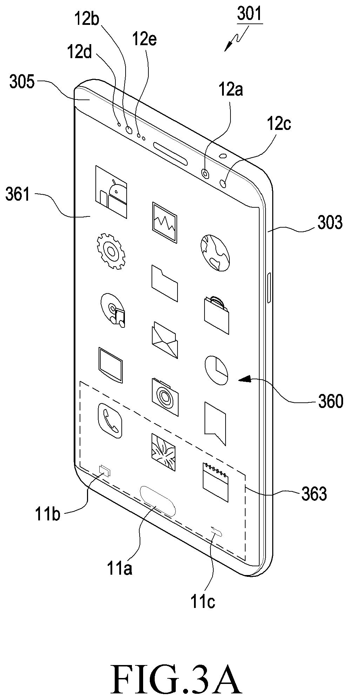

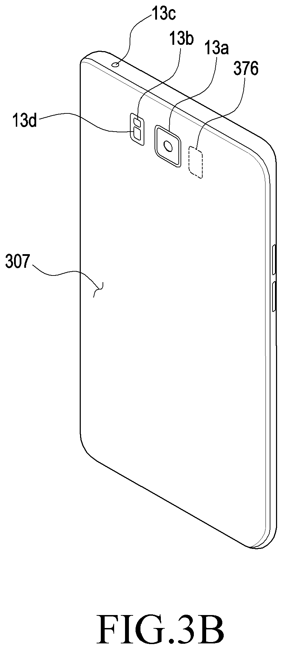

FIG. 3A is an illustration of an electronic device 301 according to an embodiment, and FIG. 3B is an illustration of an electronic device.

Referring to FIGs. 3A and 3B, the electronic device 301 (e.g., an electronic device 101) may include a housing 303 and a display 360 (e.g., a display device 160). The housing 303 may include a front surface 305 or a first surface facing a first direction, and a rear surface 307 or a second surface facing a second direction opposite to the direction of the front surface 305. The rear surface 307 of the housing 303 may be a rear cover.

The front surface 305 of the housing 303 may be at least partially open. The display 360 may include a transparent cover 361 (or a window or a cover glass). The display 360 may be mounted on the housing 303 such that the cover 361 forms at least a portion of the electronic device 301 and/or the front surface 305 of the housing 303. The cover 361 may be disposed to close the open front face 305 of the housing 303.

In an embodiment, the electronic device 301 may include a mechanically operated button, touch keys 11a, 11b, and 11c, or a keypad including at least one thereof on the front surface 305 of the housing 303 or one side of the display 360. The touch keys 11a, 11b, and 11c may detect the touch input of a user.

The housing 303 may accommodate various electronic components. At least a portion of the housing 303 may be made of a conductive material. The housing 303 may include sidewalls that form the outer surface of the electronic device 301. A printed circuit unit and/or a battery 189 may be accommodated in the housing 303. For example, in the printed circuit unit, at least one of a processor 120, a communication module 190, various interfaces 177, or a power management module 188 may be mounted in the form of an integrated circuit or chip.

The electronic device 301 may include a first camera 12a (e.g., a camera module 180), a light source portion 12b, or an iris camera 12c in the front upper end region thereof. For example, the light source portion 12b may include an infrared light emitting diode (IR LED), and the iris camera 12c may photograph a user's eye or iris illuminated with red near-infrared light output from the IR LED.

The electronic device 301 may include a light source portion indicator light 12d, an illuminance sensor, and/or a proximity sensor 12e in the front upper end region thereof.

The electronic device 301 may include a second camera 13a (e.g., the camera module 180), a heart rate monitor (HRM) 13d, and/or a flash 13b on the rear surface 307. The electronic device 301 may include a microphone 13c at an upper portion thereof.

The display 360 may be exposed through the front surface 305 of the housing 303. The display 360 may include the cover 361 and a display panel. According to one embodiment, the display 360 may include a touch panel disposed between the cover 361 and a display panel. The display 360 may output a home screen or an application screen. The display 360 may detect a touch input on the home screen or the application screen.

The electronic device 301 may include a rear surface cover that protects the rear surface 307 of the housing 303. The rear surface cover may be mounted on the housing 303 so as to face a direction (second direction) opposite the display 360. The rear surface cover may form the appearance of the electronic device 301 together with the housing 303 and the display 360.

At least a portion of an active area (or an area where actual display pixels are arranged or an area that displays a screen) of the display 360 or a fingerprint sensor area 363 may be provided as a fingerprint sensor for recognizing the fingerprint or a part thereof.

A fingerprint sensor 376 may be provided on the rear surface 307 of the electronic device 301, as shown in FIG. 3B.

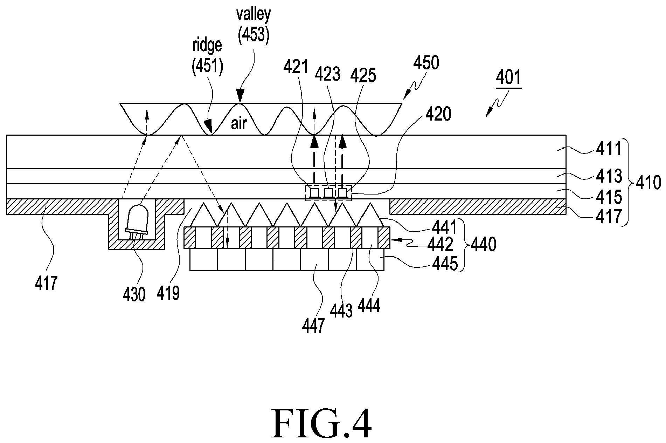

FIG. 4 is an illustration of an electronic device 401 according to an embodiment.

Referring to FIG. 4, the electronic device 401 may include a display 410, a fingerprint sensor 440 (e.g., the fingerprint sensor area 363 or the fingerprint sensor 376), and/or a light source 430. A portion (e.g., the fingerprint sensor area 363) of the display 410 shown in FIG. 4 may be included in the fingerprint sensor 440 of the electronic device 401.

The fingerprint sensor 440 may correspond to a portion of the display 410.

The display 410 may include a transparent cover 411, a display panel 415 attached to the cover 411 using an adhesive 413, and a buffering element 417. Hereinafter, the cover 411 may be referred to as a transparent member, a window, or a cover glass.

The cover 411 may be disposed on the front surface of the electronic device 401 or the housing 303, or may be disposed to form at least a portion of the front surface.

The buffering element 417 may be stacked on the surface (or the second surface) of the display panel 415 facing the fingerprint sensor 440. The buffering element 417 may include an opening 419 formed at a position corresponding to the fingerprint sensor 440.

The display panel 415 may include a plurality of pixels 420 arranged in a matrix structure of M rows and N columns. In FIG. 4, one pixel 420 is shown in an exemplary manner. Each pixel 420 may include a red (R) subpixel 421, a green (G) subpixel 423, and a blue (B) subpixel 425. The display panel 415 may be configured such that each pixel outputs light toward the cover 411 according to one or a combination selected from RGB subpixels.

The light source 430 may be configured to output light toward the cover 411.

In the absence of a separate light source 430, the electronic device 401 may utilize the pixel 420 as a light source. A fingerprint 450 may include a convex ridge 451 and a concave valley 453.

A portion of the light output from the display panel 415 or the light source 430 toward the cover 411 may be absorbed by the ridge 451 of the fingerprint 450 in contact with the surface of the cover 411.

Another portion of the light output from the display panel 415 or the light source 430 toward the cover 411 may be reflected toward the fingerprint sensor 440 from the boundary of the cover 411 and an air layer between the valley 453 and the cover 411.

The fingerprint sensor 440 may include at least one prism 441 (also referred to as a refractive member), at least one lens 442 (or a guide material/member/element), and/or an image sensor 445 (also referred to as an optical sensor).

The fingerprint sensor 440 may be attached to the buffering element 417 so as to cover the opening 419. According to one embodiment, the width of the fingerprint sensor 440 may be wider than the width of the opening 419, and the edge of the fingerprint sensor 440 may be attached on the surface (or the second surface) of the buffering element 417 facing the fingerprint sensor 440. By making the width of the fingerprint sensor 440 larger than the width of the opening 419, it is difficult for the user to identify the fingerprint sensor 440.

The fingerprint sensor 440 may be disposed on the rear surface of the display panel 415, or may be disposed with the pixels inside the display panel 415.

The electronic device 401 or the processor 120 of the electronic device 401 may control the light source 430 to output light toward the cover 411. The electronic device 401 or the processor of the electronic device 401 may use the fingerprint sensor 440 to detect the portion of the light that is reflected from the surface of the cover 411 which is disposed so as to at least partially contact the fingerprint 450. At least a portion of the detected light may represent a fingerprint image.

The at least one prism 441 may be configured to deflect the portion of the light reflected from the surface of the cover 411, which is disposed so as to at least partially contact the fingerprint 450, among the light output from the display panel 415 or the light source 430, toward the image sensor 445.

The at least one lens 442 may be configured to block at least a portion of the deflected light. The at least one lens 442 may collimate (or parallelize) the deflected light. For example, the at least one lens 442 may include at least one of a combination of a plurality of microlenses, a combination of optical fiber lenses, or a combination of a plurality of pinhole lenses.

The at least one lens 442 may include a plurality of holes 444 and partitions 443 that define the plurality of holes 444.

The partitions 443 may have the property of absorbing or reflecting incident light.

The image sensor 445 may be configured to detect light that has passed through the at least one lens 442 as image/image signal/image data.

The light output from the light source 430 or the pixel 420 may pass through the display panel 415 and the adhesive 413 and may be incident on the surface of the cover 411 which at least partially contacts the fingerprint.

The light output from the display panel 415 may pass through the adhesive 413 and may be incident on the surface of the cover 411 that at least partially contacts the fingerprint.

Light that is incident on the ridge 451 of the fingerprint 450 in contact with the surface of the cover 411 may be absorbed by the ridge 451 or the skin.

Light incident on the air layer between the valley 453 and the cover 411 may be reflected from the surface of the cover 411 that at least partially contacts the fingerprint or the boundary between the cover 411 and the air layer between the valley 453 and the cover 411.

The fingerprint sensor 440 may include at least one prism 441 (or refractive member) configured to deflect light reflected from the surface of the cover 411, disposed so as to at least partially contact the fingerprint 450, toward the image sensor 445 (or optical sensor), at least one lens 442 (or guide member) configured to block at least a portion of the deflected light, and/or the image sensor 445, configured to detect light that has passed through the at least one lens 442.

The fingerprint sensor 440 may include the refractive member 441 configured to refract light into a path toward the at least one optical sensor 445, the at least one light sensor configured to obtain the light, and the guide member 442 disposed between the refractive member 441 and the at least one optical sensor 445 and configured to provide the path so that the refracted light is transmitted to the at least one optical sensor 445.

The electronic device 401 may include the transparent cover 411, the light source 430 configured to output light toward the cover 411, the at least one prism 441 configured to deflect the portion of the light that is reflected from the surface of the cover 411, disposed so as to at least partially contact the fingerprint, toward the image sensor 445, the at least one lens 442 configured to block at least a portion of the deflected light, and the image sensor 445 configured to detect light that has passed through the at least one lens 442.

The fingerprint sensor 440 may further include a transparent cover.

The electronic device 401 may further include the light source 430 configured to output the light toward the cover 411.

The at least one lens 442 may be a lens sheet including the plurality of holes 444 and the partition 443 defining the plurality of holes 444.

The partition 443 may have the property of absorbing or reflecting incident light.

The image sensor 445 may include a plurality of pixels 447, and the interval between the plurality of pixels 447 may be greater than zero and less than or equal to 50 µm.

The interval between the plurality of holes 444 may be less than the interval between the pixels 447.

The light source 430 may include the plurality of pixels 447 included in the display 410 of the electronic device 401 that includes the fingerprint sensor 440.

The at least one prism 441 may be a prism sheet that includes a substrate and a plurality of prisms protruding from one surface of the substrate.

At least one surface of the at least one prism 441 or a cross-section perpendicular to the longitudinal direction thereof may have an equilateral-triangular shape, a right triangular shape, or a trapezoidal shape.

The at least one prism 441 may form a plurality of prism layers.

The display 410 may further include the buffering element 417, which is disposed on one side of the display 410 and has therein the opening 419. The fingerprint sensor 440 may be aligned with the opening 419.

The electronic device 401 may further include a processor 120, wherein the processor 120 may be configured to acquire/obtain a plurality of fingerprint images using lights of a plurality of wavelengths/colors, to acquire/obtain fingerprint information of the user on the basis of the plurality of fingerprint images, and to determine/identify whether designated fingerprint information matches the acquired/obtained fingerprint information.

The processor 120 may be configured to determine/identify whether user authentication succeeds or fails on the basis of the determination/identification.

The processor 120 may determine/identify whether a ridge or a valley is present for each position on the basis of the plurality of fingerprint images, and acquire/obtain the fingerprint information of the user on the basis of the determination/identification and the plurality of fingerprint images.

The fingerprint information of the user may include a fingerprint image restored from one of the plurality of fingerprint images or other fingerprint images.

The processor 120 may be configured to perform operations of acquiring/obtaining a reference fingerprint image using reference light before acquiring/obtaining the plurality of fingerprint images, determining/identifying whether the designated fingerprint image matches the acquired/obtained reference fingerprint image, and acquiring/obtaining the plurality of fingerprint images using lights of the plurality of wavelengths/colors when there is no match.

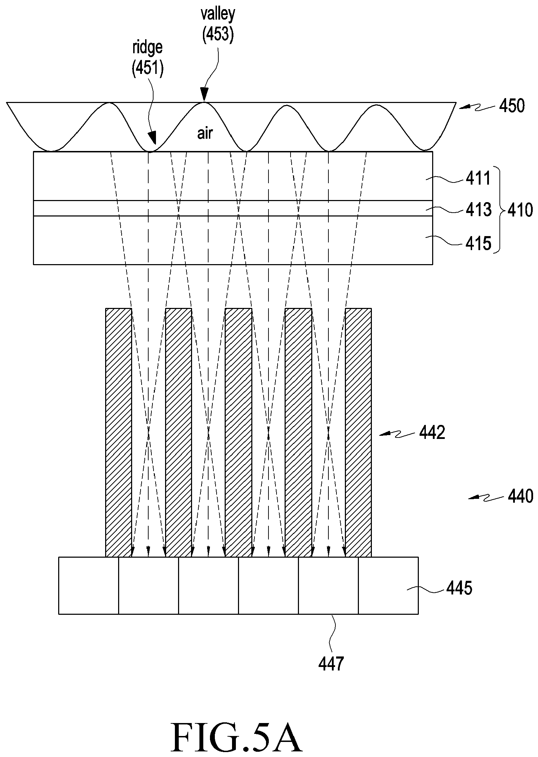

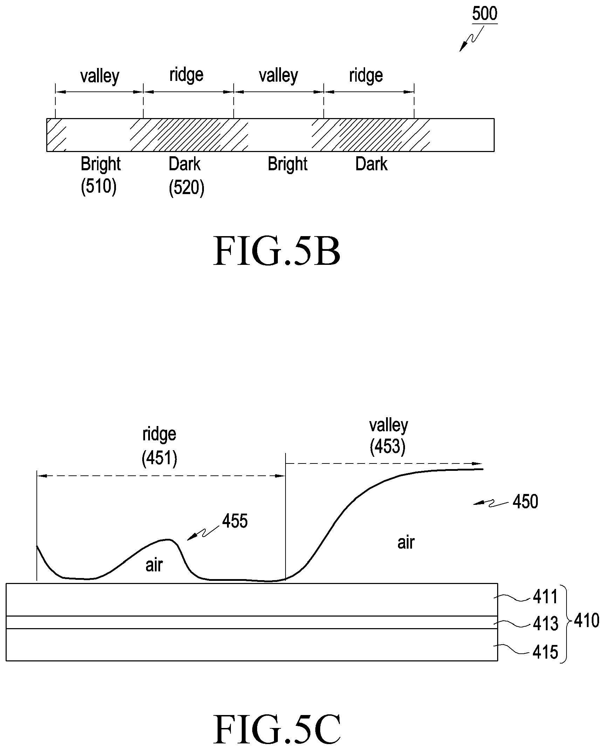

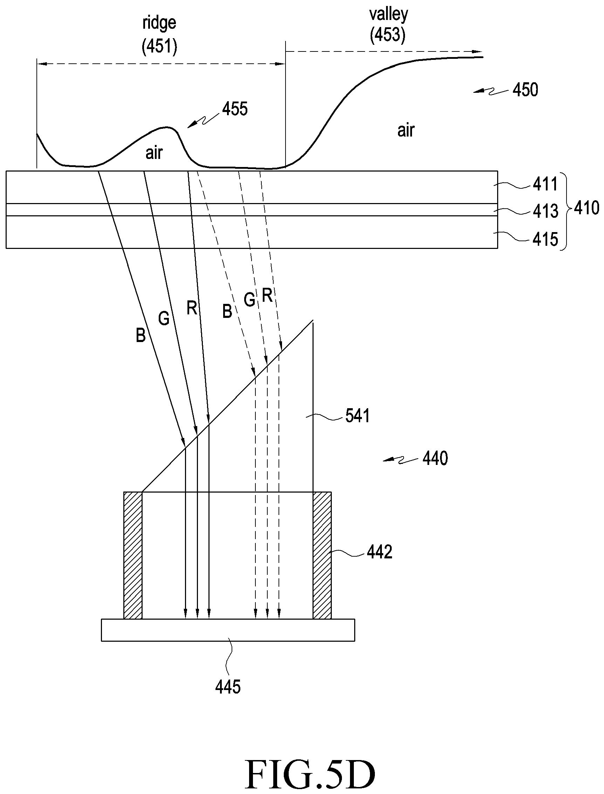

FIGS. 5A, 5B, 5C, and 5D are illustrations of a method of detecting a fingerprint image according to various embodiments.

Referring to FIG. 5A, the fingerprint sensor 440 is shown without the prism 441, and the display 410 shown in FIG. 4 is shown without the buffering element 417.

Referring to FIG. 5A, the width of each of the ridges 451 and the valleys 453 or the interval therebetween may be at least 100 µm or more. For example, in the case of an adult man, the width of each of the ridges 451 and the valleys 453 may be between 150 µm and 200 µm.

In order to distinguish image portions corresponding to the ridges 451 and the valleys 453 from the fingerprint image, the interval between the pixels 447 of the image sensor 445 may be 50 µm or less. The interval between the lenses 442 for aligning the lens 442 and the pixels 447 may be less than the interval between the pixels 447 of the image sensor 445. For example, one lens 442 may have one hole 444.

The field of view of light that can pass through the lens 442 may be determined by the width of the hole 444 in the lens 442 and the height of the lens 442. Among the light passing through the lens 442, the light that is vertically incident on the lens 442 may occupy the largest proportion. Among the light passing through the lens 442, the amount of light that is incident obliquely onto the lens 442 may be determined according to the width and height of the hole 444. The amount of light incident obliquely onto the lens 442 may have a significant effect on the signal-to-noise ratio (SNR) of the fingerprint image.

Most of the light incident on each of the lenses 442, having a narrower spacing (e.g., 50 µm or less) than the width of each of the ridges 451 and the valleys 453 or the interval therebetween (e.g., 100 µm or more), may be light reflected from the boundary between the cover 411 and the air layer between the valleys 453 and the cover 411. Most of the reflected light may pass through the holes 444 or the lens 442 aligned with the valleys 453, and a portion of the reflected light may pass through other holes or another lens out of the field of view of the lens 442, thereby acting as noise.

Referring to FIG. 5B, a fingerprint image 500 detected by an image sensor 445 may include a bright first image portion 510 corresponding to valleys 453 of a fingerprint 450 and a dark second image portion 520 corresponding to ridges (e.g., the ridges 451) of the fingerprint.

Referring to FIG. 5C, in the case of a fingerprint sensor 440, since light reflected from the surface of the cover 411 disposed to at least partially contact the fingerprint 450 is detected, the ridges 451 of the fingerprint 450 are required to be brought into close contact with the surface of the cover 411 to minimize the reflection of light, and the valleys 453 of the fingerprint 450 are required to be spaced apart from the surface of the cover 411 to maximize the reflection of light in order to acquire a clear fingerprint image.

The state of the fingerprint 450 may be continuously changed due to the surrounding environment or actions of a user. For example, when a user's hand is in a dry state, the elasticity of the ridges 451 may be reduced, such that not all of the ridges 451 may come into close contact with the cover 411, thereby causing small valleys 455 between the ridges 451 and the cover 411. A portion of light output toward the ridges 451 may be absorbed by portions of the ridges 451 that are in close contact with the surface of the cover 411. Another portion of the light output toward the ridges 451 may be reflected toward the fingerprint sensor from the boundary between the air layer and the cover 411 due to the air layer between the small valleys 455 and the cover 411. A lesser amount of light than the amount of light in a normal state is received in the pixel 447 of the image sensor 445 corresponding to the ridges 451. A difference in brightness between the bright first image portion 510, corresponding to the valleys 453 of the fingerprint 450 in the fingerprint image 500, and the dark second image portion 520, corresponding to the ridges 451 of the fingerprint 450, may be reduced compared to that in the normal state, such that the fingerprint recognition rate may be reduced.

In FIG. 5D, a portion of the fingerprint sensor 440 shown in FIG. 5A is shown, and the equilateral triangular prism 441 shown in FIG. 4 is replaced with a right triangular prism 541.

Referring to FIG. 5D, the prism 541 may be configured to deflect the obliquely incident light so that the deflected light is vertically incident on the image sensor 445. The angle of light output from the prism 541 toward the image sensor 445 may be adjusted according to the refractive index of the prism 541 and the physical angle of the surface (or inclined surface) of the prism 541.

As the prism 541, a triangular/Abbe/Pellin-Broca/Amici/compound prism capable of maximizing chromatic dispersion is used to refract light several times, thereby dispersing respective wavelength components of the light to the maximum extent.

The prism 541 may be a dispersion prism whose light transmittance is 95% or more, and may be characterized by having a small Abbe's number and by being made of a material having a large refractive index difference depending on wavelength.

In one embodiment, the light condensing efficiency can be increased by using a plurality of prisms (or prism sheets) arranged in a multi-layer structure.

The angle of the light deflected by the surface of the prism 541 may be different depending on the color (or hue) of the light incident on the prism 541. On the contrary, for example, when red light, blue light, and green light are incident on the prism 541 in different directions (or at different incident angles), the red light, the blue light, and the green light that passed through the prism 541 may be condensed in one direction (or one place). Depending on the light-condensing characteristics of the prism 541, it is possible to acquire fingerprint images formed at different positions for a plurality of colors by changing the color of light output toward the fingerprint even if a fixed prism (or prism sheet) is used.

Lights of different wavelengths/colors to be incident on the image sensor 445 at one position may be reflected at different positions of the cover 411 that are at least partially in contact with the fingerprint.

When the lights passing through the prism 541 have a wavelength difference therebetween of about 100 nm, the lights may have an incident angle difference of about 0.2 degrees and a reflection position interval of 1 mm on the basis of the lights that are condensed into one position of the image sensor 445.

When viewed from the reflection position (or the position of the fingerprint), it is possible to observe wavelength-specific fingerprint images at an interval of about 5 µm. For example, when using a prism capable of separating the wavelengths as much as possible, such as a compound prism, it is possible to observe the wavelength-specific fingerprint images at a wider interval.

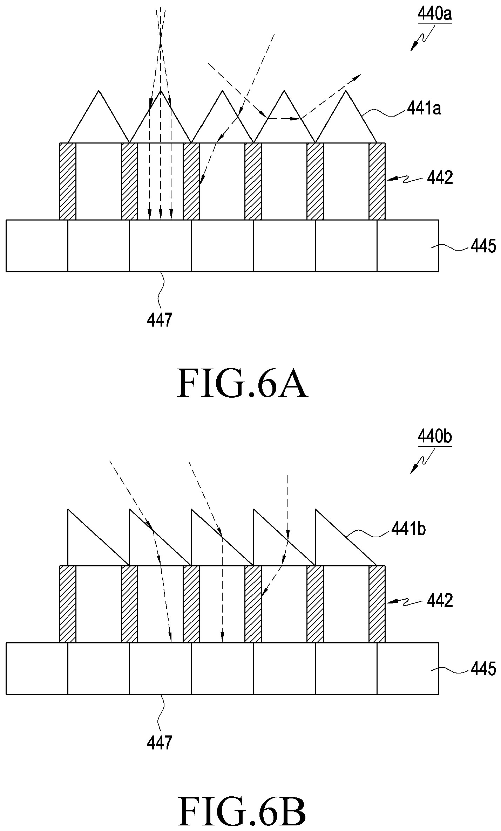

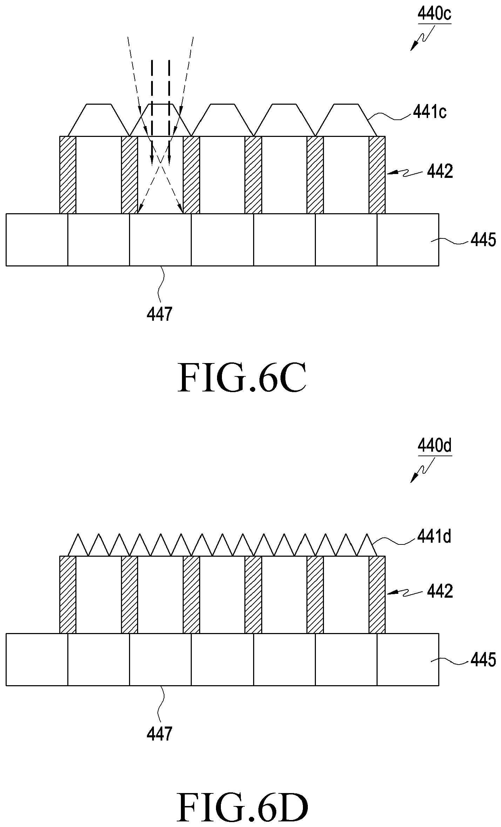

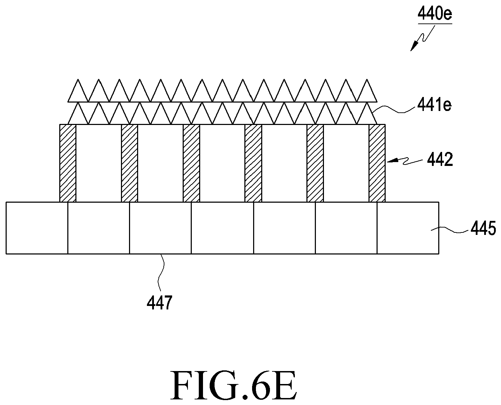

FIGS. 6A, 6B, 6C, 6D, and 6E are illustrations of prisms according to various embodiments.

Referring to FIGS. 6A, 6B, 6C, 6D, and 6E, the fingerprint sensors 440a, 440b, 440c, 440d, and 440e are similar to the fingerprint sensor 440 shown in FIG. 4, and there is a difference only in the shape and/or arrangement of the prisms, and thus a redundant description of the same constituent elements is omitted here.

Referring to FIG. 6A, the fingerprint sensor 440a may include a plurality of equilateral triangular prisms 441a. The equilateral triangular prism 441a may include a rectangular bottom surface, two equilateral triangular side surfaces, and two rectangular side surfaces located between the two equilateral triangular side surfaces. The equilateral triangular prism 441a may collimate (or parallelize) light that is reflected from a point of the cover 411 aligned with the apex of the equilateral triangular prism 441a and is incident on the two rectangular side surfaces.

The width of the ridge 451 of the fingerprint 450 may be 150 µm to 200 µm, and one ridge 451 and the plurality of pixels 447 of the image sensor 445 may be aligned with each other. Light reflected from a position separated from the point of the cover 411 corresponding to the pixels 447 may be blocked by the lens 442 aligned with the pixels 447, or may be refracted or reflected to the outside of the fingerprint sensor 440a by the equilateral triangular prism 441a.

Referring to FIG. 6B, the fingerprint sensor 440b may include a plurality of right triangular prisms 441b. The right triangular prism 441b may include a rectangular bottom surface, two right triangular side surfaces, and two rectangular side surfaces located between the two right triangular side surfaces. The right triangular prism 441b may deflect light that is reflected from a surface area of the cover 411, which is wider than the point, and is incident on an inclined rectangular side surface to the pixels 447 aligned with the right triangular prism 441b. The range of the surface area may be adjusted by changing the inclination angle of the inclined rectangular side surface.

Referring to FIG. 6C, the fingerprint sensor 440c may include a plurality of trapezoidal prisms 441c. The trapezoidal prism 441c, also referred to as an amici prism, has a rectangular bottom surface, a rectangular upper surface, two trapezoidal side surfaces between the upper surface and the bottom surface, and two rectangular side surfaces located between the two trapezoidal side surfaces. The trapezoidal prism 441c may maximally condense the light that is vertically reflected from the surface area of the cover 411, which is wider than the point, and is incident on the upper surface thereof, or may deflect the light that is incident on the two inclined rectangular side surfaces, to the pixels 447 aligned with the trapezoidal prism 441c. The trapezoidal prism 441c may receive a greater amount of light than in the case of the equilateral triangular prism 441a from the wide surface area of the cover 411.

In one embodiment, the trapezoidal prisms 441c may be arranged in a multi-layer structure.

Referring to FIG. 6D, the fingerprint sensor 440d may include a plurality of prisms 441d. Each of the plurality of prisms 441d may be one of an equilateral triangular prism, a right triangular prism, or a trapezoidal prism. A different plurality of prisms 441d may be aligned with each of the plurality of pixels 447 of the image sensor 445.

Referring to FIG. 6E, the fingerprint sensor 440e may include a plurality of prisms 441e. The plurality of prisms 441e may be arranged in a multi-layer structure. The prisms of a first layer and the prisms of a second layer may be arranged orthogonally to each other or arranged in the same direction. Each of the plurality of prisms 441 e may be one of an equilateral triangular prism, a right triangular prism, or a trapezoidal prism. A different plurality of prisms 441e may be aligned with each of the plurality of pixels 447 of the image sensor 445.

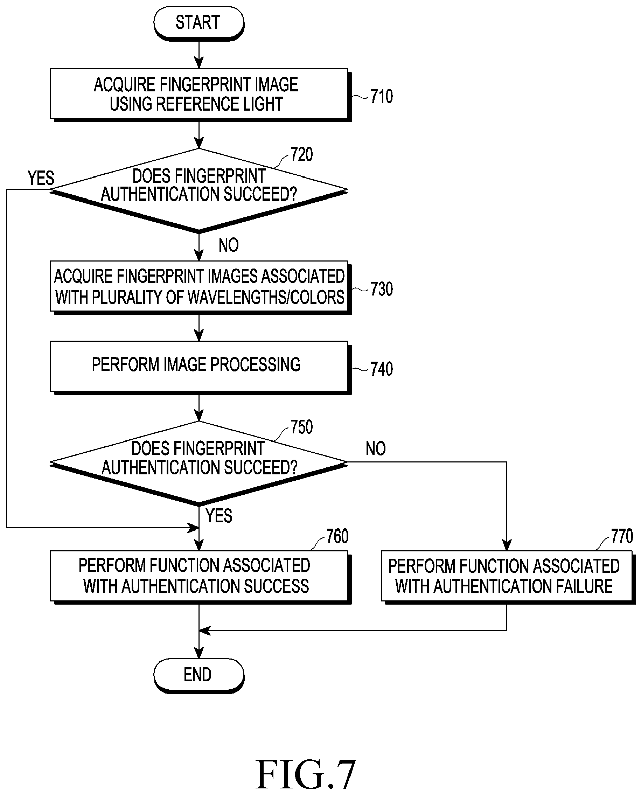

FIG. 7 is a flowchart of a fingerprint authentication method according to an embodiment.

Referring to FIG. 7, the fingerprint authentication method may include steps 710, 720, 730, 740, 750, 760, and 770. Each step/operation of the fingerprint authentication method may be performed by at least one of an electronic device, at least one processor of the electronic device, and/or a controller of the electronic device (e.g., a combination of two or more of the processor 120, the fingerprint sensor area 363/the fingerprint sensor 376 or 440, the light source 430, and/or the display device 160/the display 360 or 410). In one embodiment, at least one of steps 710, 720, 730, 740, 750, 760, and 770 may be omitted, some steps may be reordered, or other steps may be added.

In step 710, an electronic device or a processor (hereinafter referred to as an electronic device) may acquire/obtain a fingerprint image/data of a user using a reference light.

The electronic device may generate reference light having a wavelength selected from a visible light band of 300 to 800 nm and an infrared region of 800 to 1000 nm using the light source 430 or the display panel 415.

In step 720, the electronic device may determine/identify whether fingerprint authentication succeeds or fails.

The electronic device may perform fingerprint authentication. The electronic device may compare the acquired/obtained fingerprint image/data (i.e., fingerprint information) with fingerprint image/data (i.e., fingerprint information) which is previously stored in a memory 130 prior to step 710.

The electronic device may determine/identify coincidence/matching/similarity between the acquired/obtained fingerprint image/data and the previously stored fingerprint image/data. The coincidence/matching/similarity may be determined on the basis of the number of feature values/data/patterns/images of the acquired/obtained fingerprint image/data coinciding with feature values/data/pattern/images of the previously stored fingerprint image/data, or the ratio of the number to the total number of the feature values/data/patterns/images of the previously stored fingerprint image/data.

The electronic device may determine/identify whether fingerprint authentication succeeds or fails. The electronic device may perform step 760 when the fingerprint authentication succeeds, and may perform step 730 when the fingerprint authentication fails.

When the value of the coincidence/similarity between the acquired/obtained fingerprint image/data and the previously stored fingerprint image/data is greater than or equal to a predetermined threshold value, the electronic device may determine/identify that fingerprint authentication succeeded. When the value of coincidence/similarity is less than the predetermined threshold value, the electronic device may determine that fingerprint authentication has failed.

In step 730, the electronic device may acquire/obtain fingerprint images for each wavelength/color associated with a predetermined plurality of wavelengths or colors.

The electronic device may sequentially output lights of a plurality of wavelengths/colors toward the fingerprint by using a plurality of light sources for outputting the lights of the plurality of wavelengths/colors, a wavelength variable light source for sequentially outputting the lights of the plurality of wavelengths/colors, or a display panel. The electronic device may sequentially obtain/acquire/detect fingerprint images of the plurality of wavelengths/colors by using the image sensor 445.

For example, in a case in which light sources a, b, ..., and n outputting the lights of the plurality of wavelengths/colors are sequentially driven, when light is incident on ridges in a normal state, rather than in a dry state, portions corresponding to the ridges in the fingerprint images may have a color (e.g., black) representing dark portions. Portions corresponding to the valleys in the fingerprint images may have a color (e.g., white) representing bright portions.

For example, when the light is incident on the ridges in the dry state (i.e., the ridges having small valleys), portions corresponding to the ridges in the fingerprint images corresponding to the light sources a, b, c, and d may have a color (e.g., black) representing the dark portions, portions corresponding to the ridges in the fingerprint image corresponding to the light source e may have a color (e.g., white) representing the bright portions, and portions corresponding to ridges in the fingerprint images corresponding to the light sources f, g, ..., and n may have a color (e.g., black) representing dark portions. That is, in the fingerprint image corresponding to the light source e, the ridge may be erroneously recognized as a valley.

Since the width of the small valley is much less than the width of a typical valley of 200 µm, pixels aligned (or observing the small valley) with the small valley may not output continuous values (e.g., a voltage value indicating an amount of light, a light intensity or light power) for each of the light sources.

In step 740, the electronic device may compare the output value of the pixel with a designated threshold value in order to determine/identify whether the corresponding image portion has a color representing the bright portion (or whether the image portion corresponds to a valley) or a color representing the dark portion (or whether the image portion corresponds to a ridge).

The electronic device may generate a corrected fingerprint image/data at least partially based on image processing information.

In step 750, the electronic device may determine/identify whether fingerprint authentication succeeds or fails.

The electronic device may perform fingerprint authentication. The electronic device may compare the corrected fingerprint image/data (i.e., fingerprint information) with fingerprint image/data (i.e., fingerprint information) which is previously stored in the memory (e.g., the memory 130) prior to step 710.

The electronic device may determine whether fingerprint authentication succeeds or fails. The electronic device may perform step 760 when fingerprint authentication succeeds, and may perform step 770 when fingerprint authentication fails.

In step 760, the electronic device may perform functions associated with authentication success. A certain function of the electronic device may be associated with fingerprint authentication by at least one of user settings, automatic settings, or configuration. The electronic device may store association information between the certain function of the electronic device and the fingerprint authentication in the memory.

In step 770, the electronic device may notify the user of authentication failure. In one embodiment, the electronic device may perform visual/auditory/tactile notification (e.g., at least one of a voice output, a vibration output, or a display of a graphical element).

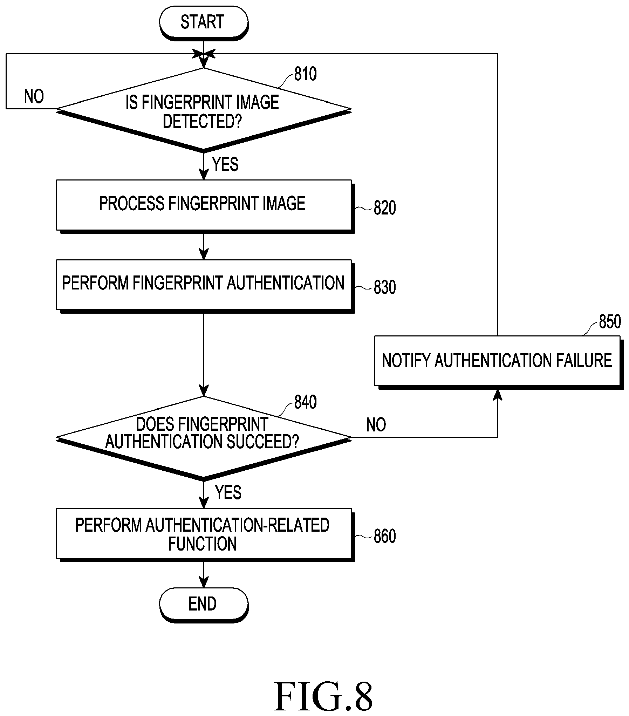

FIG. 8 is a flowchart of a fingerprint-based operation method of an electronic device according to an embodiment. The fingerprint-based operation method of the electronic device may include steps 810, 820, 830, 840, 850, and 860. Each step/operation of the fingerprint-based operation method may be performed by at least one of an electronic device, at least one processor of the electronic device, and a controller of the electronic device (e.g., a combination of two or more of the processor 120, the fingerprint sensor area 363/the fingerprint sensor 376 or 440, the light source 430, and the display device 160/the display 360 or 410). At least one of steps 810, 820, 830, 840, 850, and 860 may be omitted, some steps may be reordered, or other steps may be added.

In step 810, the electronic device may identify whether a fingerprint image/data (i.e., fingerprint information) (e.g., the fingerprint image/data of step 710 or the corrected fingerprint image/data of step 740) of a user is detected/obtained. The electronic device may perform step 820 when the fingerprint image/data is detected/obtained, and may periodically perform step 810 when the fingerprint image/data is not detected/obtained.

The electronic device may maintain the exposure time of an image sensor 445 of a fingerprint sensor 376 or 440 at a predetermined threshold time or more in order to suppress noise caused by external ambient light (or sunlight).

In step 820, the electronic device may perform image-related processing on the fingerprint image.

The electronic device may measure information about a noise signal of the fingerprint sensor (e.g., a noise signal from a backlight of the light source 430 and/or the display panel 415) prior to performing the fingerprint-based operating method. The electronic device may reduce/subtract the noise signal from an output signal of the fingerprint sensor corresponding to the fingerprint image, thereby reducing the noise of the fingerprint image.

The electronic device may remove a frequency component corresponding to a noise portion from the output signal of the fingerprint sensor corresponding to the fingerprint image.

The electronic device may perform a Fourier transform on fingerprint data in order to convert data in a time domain into data in a frequency domain. The electronic device may remove a periodic component, a high-frequency region, or a low-frequency region corresponding to the noise portion from the Fourier-transformed fingerprint data. The electronic device may perform an inverse Fourier transform on the noise-removed fingerprint data in order to convert the data in the frequency domain into data in the time domain.

In step 830, the electronic device may perform fingerprint authentication. The electronic device may compare the detected/obtained fingerprint image/data with a fingerprint image/data (i.e., fingerprint information) which is previously stored in the memory (e.g., the memory 130) prior to step 810.

The electronic device may determine/identify coincidence/matching/similarity between the detected/obtained fingerprint image/data and the previously stored fingerprint image/data. The coincidence/matching/similarity may be determined on the basis of the number of feature values/data/patterns/images of the detected/obtained fingerprint image/data coinciding with feature values/data/pattern/images of the previously stored fingerprint image/data, or the ratio of the number to the total number of feature values/data/patterns/images of the previously stored fingerprint image/data.

In step 840, the electronic device may determine/identify whether fingerprint authentication succeeds or fails. The electronic device may perform step 860 when fingerprint authentication succeeds, and may perform step 850 when fingerprint authentication fails. According to one embodiment, when the value of the coincidence/similarity between the detected/obtained fingerprint image/data and the previously stored fingerprint image/data is greater than or equal to a predetermined threshold value, the electronic device may determine that fingerprint authentication succeeded. When the value of coincidence/similarity is less than the predetermined threshold value, the electronic device may determine that fingerprint authentication failed.

In step 850, the electronic device may notify the user of authentication failure. The electronic device may perform visual/auditory/tactile notification (e.g., at least one of a voice output, a vibration output, and a display of a graphical element).

In step 860, the electronic device may perform an authentication-related function. A certain function of the electronic device or an application may be associated with fingerprint authentication by at least one of user settings, automatic settings, or configuration. The electronic device may store information associated with the certain function of the electronic device or the application and the fingerprint authentication in the memory.

The authentication-related function may include at least one of an unlock function, an application execution function, a personal authentication function, a multimedia control function, an input interface change function, or a mode change function.

The unlock function may include a function of unlocking the certain function/graphic element through a fingerprint input. The application execution function may include a function of executing at least one of a game application, a social networking service (SNS) application, a document creation application, and a multimedia application, or a function of connecting to a corresponding contact via a communication application (e.g., a phone application or a message application). The personal authentication function may include a function of transmitting at least one of fingerprint information, other personal/authentication/secret information stored in the memory, information on an authentication result, or information to be set at the time of authentication success to an external electronic device 102 or 104. The multimedia control function may include a function of displaying control menus (e.g., a volume control menu or a playback menu), a volume control function (e.g., volume up, volume down, or mute processing), or a playback control function (e.g., rewind, fast forward, pause, or playback). The interface change function may include a function of changing at least one of an input interface, an output interface, or a communication interface. The mode change function may include a function of changing from a first mode (e.g., a normal mode, a guest mode, or a restricted mode) to a second mode (e.g., an edit mode, an administrator mode, or an unrestricted mode).

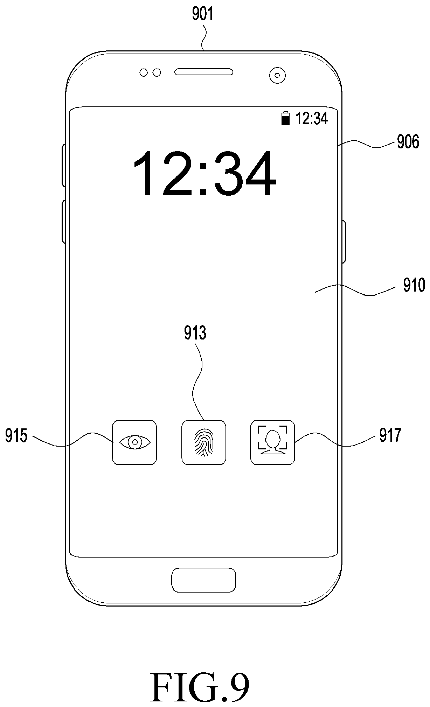

FIG. 9 is an illustration of an electronic device 901 according to an embodiment.

Referring to FIG. 9, the electronic device 901 may display a lock screen 910 on a display 906. The lock screen 910 may include a first graphic element 913 for fingerprint authentication, a second graphic element 915 for iris authentication, and/or a third graphic element 917 for facial authentication. The electronic device 901 may detect/obtain the fingerprint input of a user on the first graphic element 913 for fingerprint authentication.

When the fingerprint input of the user is detected/obtained, the electronic device 901 may determine/identify whether fingerprint authentication succeeds or fails based on the comparison between a detected/obtained fingerprint image/data (e.g., the fingerprint image/data of step 710 or the corrected fingerprint image/data of step 740) and a fingerprint image/data previously stored in a memory 130.

When the second graphic element 915 for iris authentication is selected, the electronic device 901 may display a guidance screen for iris capture. The electronic device 901 may capture the iris of the user and may determine/identify whether iris authentication succeeds or fails based on the comparison between iris image data obtained through capturing and iris image data previously stored in the memory.

When the third graphic element 917 for facial authentication is selected, the electronic device 901 may display a guidance screen for facial capture. The electronic device 901 may capture the face of the user and may determine/identify whether facial authentication succeeds or fails based on the comparison between facial image data acquired through the capturing and facial image data previously stored in the memory.

When fingerprint/iris/face authentication succeeds, the electronic device 901 may perform unlocking and may display a home screen or an application screen that was previously displayed immediately before the locking.

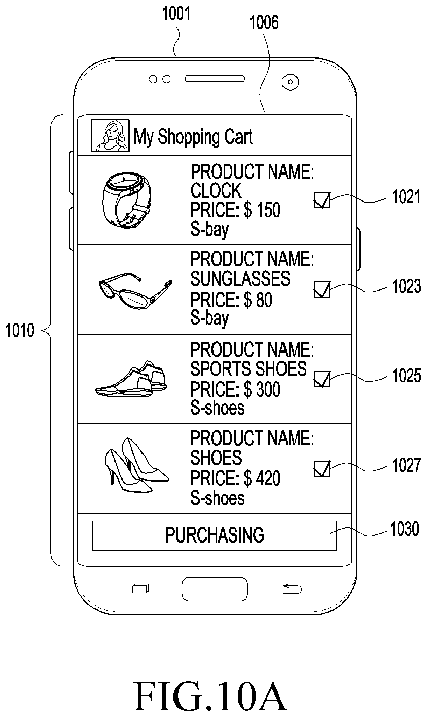

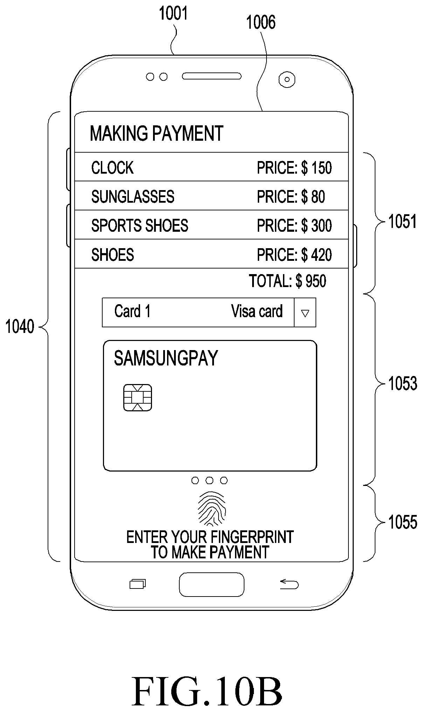

FIGS. 10A and 10B are illustrations of an electronic device 1001 according to various embodiments

Referring to FIG. 10A, the electronic device 1001 may display a first interface 1010 for an integrated storage area in which information about at least one item is stored on a display 1006. The first interface 1010 may include at least one first graphic element/area 1021, 1023, 1025, or 1027 (e.g., a checkmark) for selecting at least one item via the display 1006, and/or a second graphic element 1030/area (e.g., a purchase button) corresponding to a purchase (or payment) function.

When a touch/selection for the second graphic element/area 1030 is detected, the electronic device 1001 may display a second interface 1040 for payment on the display 1006 as shown in FIG. 10B.

Referring to FIG. 10B, the second interface 1040 may include payment information corresponding to the at least one item, payment means information, and/or graphical elements corresponding to user authentication. For example, the second interface 1040 may include a third graphic element/area 1051 corresponding to price information for the at least one item, a fourth graphic element/area 1053 corresponding to information about a payment means (e.g., a card) for payment or a function for selecting the payment means, and/or a fifth graphic element/area 1055 corresponding to a function for acquiring biometric authentication information for user authentication.

The electronic device 1001 may receive a touch input for selecting a payment card through the display 1006. The electronic device 1001 may detect/obtain a fingerprint input on the fifth graphic element/area 1055. The electronic device 1001 may compare a detected/obtained fingerprint image/data (e.g., the fingerprint image/data of step 710 or the corrected fingerprint image/data of step 740) with the previously stored fingerprint image/data. When the fingerprint authentication succeeds, the electronic device 1001 may generate payment information for the at least one item. The electronic device 1001 may transmit the generated payment information and/or information about the selected card to at least one external electronic device 102 or a merchant server.

While the present disclosure has been shown and described with reference to certain embodiments thereof, it will be understood by those skilled in the art that various changes in form and details may be made therein without departing from the scope of the present disclosure as defined by the appended claims and their equivalents.

## Claims

1. A fingerprint sensor, comprising:
a refractive member configured to refract light into a path toward at least one optical sensor;
the at least one optical sensor configured to obtain the light; and
a guide member disposed between the refractive member and the at least one optical sensor and configured to provide the path so that the refracted light is transmitted to the at least one optical sensor.

2. The fingerprint sensor of claim 1, further comprising:
a transparent cover; and
a light source configured to output the light toward the transparent cover.

3. The fingerprint sensor of claim 1, wherein the guide member is a lens sheet including a plurality of holes and a partition defining the plurality of holes, and
wherein the partition is configured to absorb or reflect incident light.

4. The fingerprint sensor of claim 2, wherein the light source includes a plurality of pixels included in a display of an electronic device including the fingerprint sensor.

5. The fingerprint sensor of claim 1, wherein the refractive member is a prism sheet including a substrate and a plurality of prisms protruding from one surface of the substrate.

6. The fingerprint sensor of claim 1, wherein at least one surface of the refractive member or a cross section perpendicular to a longitudinal direction of the refractive member has an equilateral-triangular shape, a right triangular shape, or a trapezoidal shape.

7. An electronic device, comprising:
a transparent cover;
a light source configured to output light toward the transparent cover;
a refractive member configured to refract the light into a path toward at least one optical sensor;
the at least one optical sensor configured to obtain the light; and
a guide member disposed between the refractive member and the at least one optical sensor and configured to provide the path so that the refracted light is transmitted to the at least one optical sensor.

8. The electronic device of claim 7, further comprising:
a processor configured to:
obtain a plurality of fingerprint images using lights of a plurality of wavelengths,
obtain fingerprint information of a user based on the plurality of fingerprint images, and
identify whether designated fingerprint information matches the obtained fingerprint information.

9. The electronic device of claim 8, wherein the processor is further configured to identify whether authentication of the user succeeds or fails based on the identification as to whether designated fingerprint information matches the obtained fingerprint information.

10. The electronic device of claim 8, wherein the processor is further configured to:
identify whether a ridge or a valley is present for each position based on the plurality of fingerprint images, and
obtain the fingerprint information of the user based on the identification as to whether a ridge or a valley is present for each position and the plurality of fingerprint images.

11. The electronic device of claim 8, wherein the processor is further configured to:
obtain a reference fingerprint image using reference light, before obtaining the plurality of fingerprint images,
identify whether the designated fingerprint image matches the obtained reference fingerprint image, and
obtain the plurality of fingerprint images using the lights of the plurality of wavelengths when the matching fails.

12. The electronic device of claim 7, wherein the refractive member includes a plurality of holes and a partition configured to define the plurality of holes, and
wherein the partition is configured to absorb or reflect incident light.

13. The electronic device of claim 7, wherein the light source includes a plurality of pixels included in a display of the electronic device.

14. The electronic device of claim 7, wherein the refractive member is a prism sheet including a substrate and a plurality of prisms protruding from one surface of the substrate.

15. The electronic device of claim 7, wherein at least one surface of the refractive member or a cross section perpendicular to a longitudinal direction of the refractive member has an equilateral-triangular shape, a right triangular shape, or a trapezoidal shape.
